# FASCICULE DE BREVET EUROPEEN

(11) **EP 0 789 444 B1**
(45) Date de publication et mention de la délivrance du brevet: **19.12.2001**
(21) Numéro de dépôt: 97400281.8
(22) Date de dépôt: 07.02.1997
(51) Int. Cl.: H02K 49/04, B60L 7/28

(54) **Transmission de véhicule équipée d'un ralentisseur électrique**
Kraftfahrzeuggetriebe, versehen mit einem elektrischen Retarder
Vehicle transmission equipped with an electric retarder

(30) Priorité: 12.02.1996 FR 9601688
(43) Date de publication de la demande: 13.08.1997
(73) Titulaire: LABINAL, 78180 Montigny le Bretonneux (FR)
(72) Inventeur: Rugraff, Guy, 93500 Pantin (FR)
(74) Mandataire: Burbaud, Eric

(56) Documents cités:
- GB-A- 2 122 035
- US-A- 3 908 141
- US-A- 4 128 147

## Description

L'invention est relative aux transmissions pour véhicules terrestres à moteur, c'est-à-dire aux dispositifs transmettant le mouvement de rotation du moteur jusqu'aux roues des véhicules.

Parmi ces transmissions, l'invention concerne plus spécialement celles qui comprennent :
- un mécanisme de transmission (boîte de vitesses, pont, ou autre) entraîné par le moteur du véhicule et présentant un arbre de sortie rotatif autour d'un axe, ce mécanisme comportant un carter qui comprend lui-même un corps principal sur lequel est fixée une plaque de fermeture au moyen de vis, cette plaque de fermeture s'étendant dans un plan moyen perpendiculaire à l'axe de rotation, et l'arbre de sortie étant supporté par au moins un palier d'extrémité au voisinage de la plaque de fermeture,
- une fourche de joint de cardan qui est entraînée par l'arbre de sortie du mécanisme de transmission à travers la plaque de fermeture et qui entraîne elle-même un arbre de liaison, cette fourche de joint de cardan présentant au moins un épaulement extérieur qui forme une face arrière orientée vers la plaque de fermeture, laquelle face arrière est écartée axialement de la plaque de fermeture en laissant libre un certain espace annulaire entre elle-même et ladite plaque de fermeture,
- et un ralentisseur électrique à courants de Foucault comportant d'une part un stator inducteur annulaire monté en porte-à-faux sur le carter à l'aide d'une ossature, et d'autre part un rotor comprenant au moins un disque induit en matériau ferromagnétique qui est disposé en regard du stator et qui est solidarisé à l'arbre de sortie du mécanisme de transmission au moyen d'un organe de support, l'ossature étant fixée au carter par au moins certaines des vis susmentionnées qui servent également à la fixation de la plaque de fermeture de ce carter, cette plaque de fermeture étant traversée par ces vis et étant ainsi serrée entre l'ossature et le corps principal du carter, et ladite plaque de fermeture n'incluant aucun organe de support spécialement conçu pour monter le stator du ralentisseur électrique.

Le document US-A-4 128 147 décrit une transmission de véhicule de ce type.

Les transmission de véhicule du type explicité ci-dessus présentent un coût de revient élevé, du fait que la position de la fourche de joint de cardan est décalée axialement en s'éloignant du carter, par rapport à la position occupée normalement par cette fourche de joint de cardan en l'absence de ralentisseur électrique. Ce décalage axial implique d'une part que l'arbre de liaison entraîné par la fourche de joint de cardan est plus court que la normale, donc coûteux puisque produit en petite série, et d'autre part qu'on augmente le porte-à-faux de la fourche de joint de cardan par rapport au palier d'extrémité supportant l'arbre de sortie du mécanisme de transmission, de sorte que ce palier d'extrémité doit être renforcé, par exemple par adjonction d'un roulement supplémentaire, ce qui rend ledit palier complexe et coûteux.

Ces inconvénients sont sensibles dans tous les cas de figure, que la transmission soit équipée dès l'origine avec un ralentisseur électrique, ou qu'on adapte ce ralentisseur sur une transmission qui était déjà montée sans ralentisseur dans un véhicule.

Toutefois, dans le cas où on adapte un ralentisseur électrique sur une transmission qui était déjà entièrement montée dans un véhicule et qui n'était pas pourvue à l'origine d'un tel ralentisseur, les inconvénients susmentionnés deviennent encore plus importants, dans la mesure où cette adaptation implique alors la modification du palier d'extrémité qui supporte l'arbre de sortie de ce mécanisme, et le remplacement de l'arbre de liaison entraîné par la fourche de joint de cardan : ces différentes opérations entraînent des achats de pièces coûteuses et des dépenses de main-d'oeuvre élevées, et ces dépenses grèvent fortement le coût de l'adaptation du ralentisseur électrique sur la transmission existante.

La présente invention a notamment pour but de pallier ces différents inconvénients.

A cet effet, selon l'invention, une transmission du genre en question est caractérisée en ce que la fourche de joint de cardan est fixée directement à l'arbre de sortie, l'organe de support du rotor est fixé uniquement sur la face arrière de la fourche de joint de cardan dans l'espace annulaire compris entre la plaque de fermeture et la face arrière de la fourche de joint de cardan, cette fourche de joint de cardan ayant une position axiale indépendante de la présence du ralentisseur électrique, et en ce que le palier d'extrémité de l'arbre de sortie a une constitution indépendante de la présence du ralentisseur électrique.

Du fait que le porte-à-faux de la fourche de joint de cardan par rapport au palier d'extrémité n'est pas augmenté par l'installation du ralentisseur, cette installation n'entraîne pas d'augmentation sensible des charges supportées par le palier d'extrémité, de sorte qu'on peut utiliser un palier d'extrémité standard.

En effet, les seules charges supplémentaires imposées au palier d'extrémité par l'installation du ralentisseur sont les charges statiques et dynamiques dues au rotor, mais ces charges supplémentaires sont négligeables par rapport aux charges dynamiques normalement subies par le palier d'extrémité du fait du fonctionnement du véhicule (à titre d'exemple ces charges dynamiques peuvent atteindre environ 9 tonnes pour un poids lourd).

Grâce à ces dispositions, il est possible d'utiliser une transmission standard de véhicule pour lui associer un ralentisseur électrique, qu'il s'agisse d'inclure le ralentisseur dans la transmission dès le montage initial de cette transmission en usine, ou qu'il s'agisse d'adapter un ralentisseur sur une transmission existante déjà montée dans un véhicule et dépourvue de ralentisseur électrique.

Par conséquent, le prix de revient de l'installation d'un ralentisseur électrique est fortement diminué par rapport aux dispositifs de l'art antérieur, et cette installation est également beaucoup plus simple.

Dans des modes de réalisation préférés de la transmission selon l'invention, on a recours en outre à l'une et/ou à l'autre des dispositions suivantes :
- l'organe de support est vissé sur la face arrière de la fourche de joint de cardan ;
- la fourche de joint de cardan comporte au moins un alésage borgne qui débouche dans sa face arrière, l'organe de support étant traversé par un alésage en correspondance exacte avec l'alésage de la fourche de joint de cardan, et une cheville métallique étant emboîtée à force dans ces deux alésages pour solidariser parfaitement en rotation l'organe de support et la fourche de joint cardan ;
- l'organe de support est un plateau sensiblement annulaire qui s'étend radialement vers l'extérieur à partir de la fourche de joint de cardan ;
- le plateau est solidaire d'un tube qui entoure la fourche de joint de cardan et sur lequel est monté le disque induit du rotor ;
- le mécanisme de transmission est une boîte de vitesses.

Par ailleurs, l'invention a également pour objet un procédé pour adapter un ralentisseur électrique à courants de Foucault sur une transmission pour véhicule terrestre à moteur, cette transmission comprenant :
- un mécanisme de transmission entraîné par le moteur du véhicule et présentant un arbre de sortie rotatif autour d'un axe, ce mécanisme comportant un carter qui comprend lui-même un corps principal sur lequel est fixée une plaque de fermeture au moyen de vis, cette plaque de fermeture s'étendant dans un plan moyen perpendiculaire à l'axe de rotation, et ladite plaque de fermeture n'incluant aucun organe de support spécialement conçu pour monter le ralentisseur électrique, l'arbre de sortie étant supporté par au moins un palier d'extrémité au voisinage de la plaque de fermeture, lequel palier d'extrémité a une constitution indépendante de la présence du ralentisseur électrique,
- et une fourche de joint de cardan qui est fixée directement à l'arbre de sortie du mécanisme de transmission à travers la plaque de fermeture et qui entraîne un arbre de liaison, cette fourche de joint de cardan présentant au moins un épaulement extérieur qui forme une face arrière orientée vers la plaque de fermeture, laquelle face arrière est écartée axialement de la plaque de fermeture en laissant libre un certain espace annulaire entre elle-même et ladite plaque de fermeture, et la fourche de joint de cardan ayant une position axiale indépendante de la présence du ralentisseur électrique,
le ralentisseur électrique à courants de Foucault comportant d'une part un stator inducteur annulaire destiné à être monté en porte-à-faux sur le carter à l'aide d'une ossature, et d'autre part un rotor comportant au moins un disque induit en matériau ferromagnétique qui est disposé en regard du stator et qui est destiné à être solidarisé à la fourche de joint de cardan au moyen d'un organe de support,
ce procédé comportant les étapes suivantes :
a) démonter la fourche de joint de cardan,
b) fixer l'ossature au carter par au moins certaines des vis de la plaque de fermeture en fixant simultanément cette plaque de fermeture, la plaque de fermeture étant alors traversée par ces vis et étant ainsi serrée entre l'ossature et le corps principal du carter,
c) fixer l'organe de support du rotor uniquement sur la face arrière de la fourche de joint de cardan dans l'espace annulaire compris entre la plaque de fermeture et la face arrière de la fourche de joint de cardan,
d) et remonter cette fourche de joint de cardan dans la position axiale exacte qu'elle occupait initialement relativement à la plaque de fermeture.

Dans des modes de réalisation préférés du procédé selon l'invention, on a recours en outre à l'une et/ou à l'autre des dispositions suivantes :
- le procédé comprend en outre une étape préliminaire au cours de laquelle :
   . on usine, sur la face extérieure de la plaque de fermeture, des surfaces d'appui parfaitement planes et parfaitement perpendiculaires à l'axe de rotation, autour des trous de fixation de ladite plaque de fermeture qui reçoivent les vis de fixation de cette plaque, l'ossature comportant par ailleurs des surfaces d'appui complémentaires qui viennent en regard desdites surfaces d'appui de la plaque de fermeture,
   . et on usine la face arrière de la fourche de joint de cardan de façon qu'elle soit parfaitement plane et perpendiculaire à l'axe de rotation ;
- l'étape c) est suivie par une étape consistant à :
   . percer à la fois dans l'organe de fixation et dans la fourche de joint de cardan au moins un alésage qui traverse l'organe de support et pénètre dans la fourche de joint de cardan,
   . et emboîter à force une cheville métallique dans ledit alésage, cette cheville pénétrant à la fois dans l'organe de support et dans la fourche de joint de cardan ;
- au cours de l'étape b) on enlève au moins certaines des vis de fixation de la plaque de fermeture, et on les remplace par des vis plus longues en fixant simultanément l'ossature au carter au moyen de ces vis.

Les caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue schématique partielle en coupe verticale d'une transmission de véhicule selon une forme de réalisation de l'invention, le plan de coupe étant localement décalé au niveau de deux vis de fixation de la plaque de fermeture du mécanisme de transmission et au niveau d'une vis de fixation du stator du ralentisseur électrique,
- la figure 2 est une vue schématique selon la direction II de la figure 1, montrant l'ossature qui supporte le stator du ralentisseur électrique,
- la figure 3 est une vue selon la direction III de la figure 1, montrant le rotor du ralentisseur électrique,
- la figure 3A est une vue de détail de la figure 3, en coupe,
- la figure 4 est une vue de détail en coupe axiale d'un tube intercalaire appartenant au rotor du ralentisseur électrique dans la transmission représentée sur la figure 1,
- les figures 5 et 6 sont des vues en bout du tube de la figure 4, respectivement selon les directions V et VI de la figure 4,
- et les vues 7 et 8 sont des vues partielles similaires respectivement aux figures 1 et 3 pour une variante du dispositif des figures 1 à 6.

Sur les différentes figures, les mêmes références désignent des éléments identiques ou similaires.

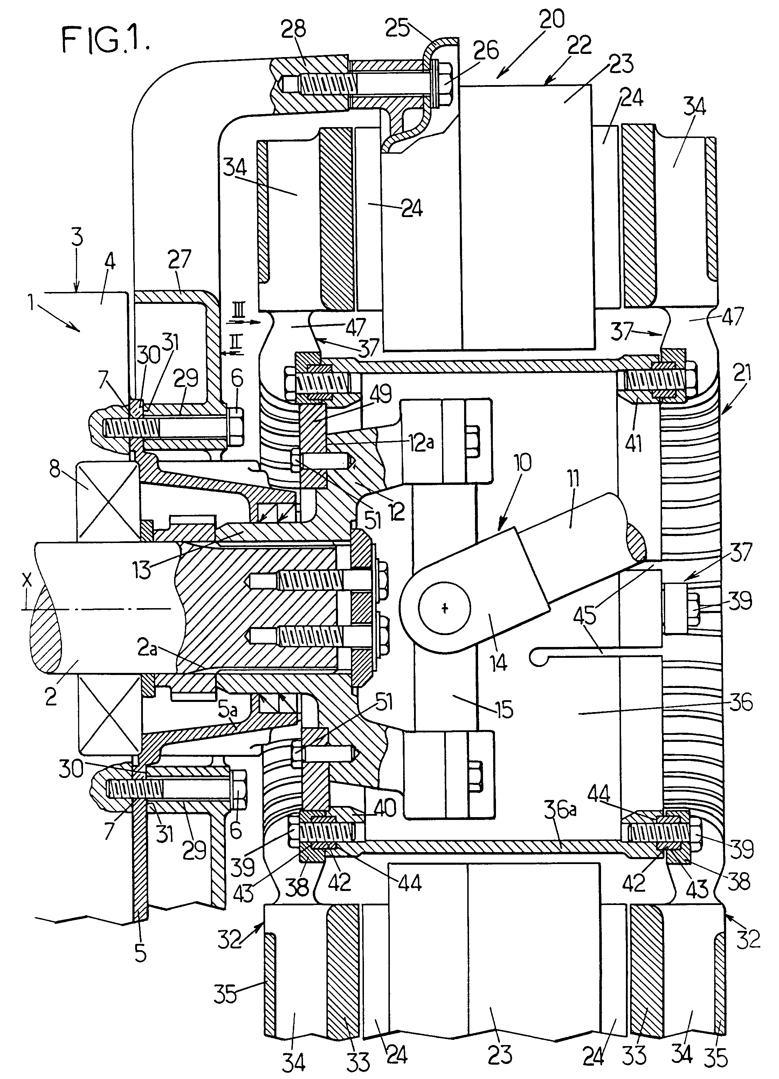

La figure 1 représente une partie d'une transmission de véhicule automobile, notamment poids lourd ou autobus.

Cette transmission comprend :
- une boîte de vitesses 1 entraînée par le moteur du véhicule (non représenté) et présentant un arbre de sortie 2 rotatif autour d'un axe X sensiblement horizontal,
- un joint de cardan 10 qui se trouve dans une position axiale standard, indépendante de la présence ou non d'un ralentisseur électrique, ce joint de cardan étant entraîné par l'arbre de sortie 2 et entraînant lui-même un arbre de liaison 11 qui s'étend en général jusqu'à un deuxième joint de cardan (non représenté) relié à un pont (non représenté), l'une 12 des fourches du joint de cardan 10 étant pourvue d'un manchon 13 cannelé intérieurement qui est emmanché sur l'extrémité de l'arbre de sortie 2, laquelle extrémité est dotée de cannelures extérieures 2a en correspondance avec les cannelures intérieures du manchon 13,
- et un ralentisseur électrique 20 à courants de Foucault monté en porte-à-faux sur la boîte de vitesses 1, ce type de ralentisseur étant connu sous la marque déposée "FOCAL".

Ces différents éléments vont maintenant être décrits plus en détail.

S'agissant tout d'abord de la boîte de vitesses 1, celle-ci est délimitée extérieurement par un carter 3 qui comprend d'une part un corps principal 4 et d'autre part une plaque de fermeture frontale 5.

La plaque de fermeture 5 ne présente pas de partie de support spécialement conçue pour le montage du ralentisseur électrique, et de façon plus générale, elle est conçue indépendamment de la présence ou non du ralentisseur électrique.

Cette plaque de fermeture 5 est fixée de façon étanche sur le corps principal 4 du carter au moyen de vis 6 qui traversent des trous 7 ménagés dans ladite plaque de fermeture et qui sont vissées dans le corps principal 4.

La plaque de fermeture 5 est disposée dans un plan général perpendiculaire à l'axe X et elle présente un nez central annulaire 5a qui fait saillie vers l'extérieur. Ce nez central 5a est traversé par l'arbre de sortie 2, et il reçoit en outre le manchon 13 de la fourche 12.

Par ailleurs, au voisinage de ce nez central 5a, l'arbre de sortie 2 est supporté par un palier d'extrémité constitué par un roulement 8 qui est standard et qui est dimensionné indépendamment de la présence ou non du ralentisseur électrique 20.

En ce qui concerne le ralentisseur électrique 20, celui-ci comprend, de façon connue en soi, un rotor induit 21 qui tourne avec l'arbre 2 et un stator inducteur 22 fixe comportant des bobines électromagnétiques 23 qui, lorsqu'elles sont parcourues par un courant électrique, génèrent des courants de Foucault dans le rotor 21, de sorte que ce rotor exerce un couple de freinage sur l'arbre 2.

Les bobines 23 du stator sont en nombre pair, et elles comportent chacune un noyau ferromagnétique (non représenté) qui s'étend longitudinalement parallèlement à l'axe X entre deux pôles 24. L'ensemble des pôles 24 forme deux couronnes centrées sur l'axe X, les pôles 24 de chaque couronne étant alternativement orientés Nord et Sud.

Les bobines 23 et leurs noyaux sont portés par un flasque 25 rigide en matériau amagnétique, qui présente une forme sensiblement annulaire et qui est lui-même fixé par des vis 26 à quatre bras 28 d'une ossature 27.

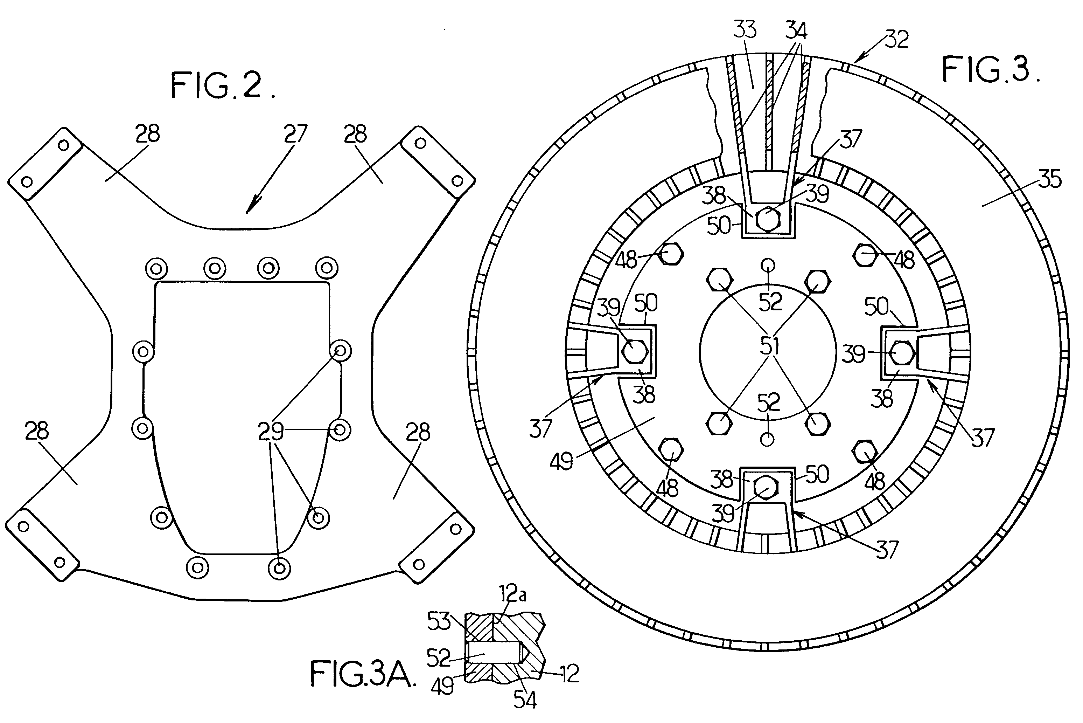

L'ossature 27, qui est bien visible sur les figures 1 et 2, est une pièce rigide qui peut être réalisée par exemple en fonte de type GS et qui présente des trous 29 en correspondance avec les trous 7 de la plaque de fermeture.

Ces trous 29 sont traversés par les vis 6 susmentionnées, dont les têtes s'appuient sur la face extérieure de l'ossature 27 pour fixer simultanément cette ossature et la plaque de fermeture 5 au corps principal 4 du carter, de sorte que la plaque de fermeture 5 est serrée entre l'ossature 27 et le corps principal 4.

Afin de permettre ce serrage dans de bonnes conditions, il serait éventuellement possible d'interposer des cales entre la plaque de fixation 5 et l'ossature 27 au droit des vis 6.

Mais de préférence, on usine des surfaces d'appui 30 annulaires, parfaitement planes et parfaitement perpendiculaires à l'axe X, sur la face extérieure de la plaque de fermeture 5 autour de chaque trou 7, et l'ossature 27 comporte pareillement des surfaces d'appui usinées 31 parfaitement planes et parfaitement perpendiculaires à l'axe X. Les surfaces d'appui 30 et 31 sont disposées en correspondance et sont en contact mutuel, en permettant un bon appui de l'ossature 27 sur la plaque de fermeture 5.

Par ailleurs, le rotor 21, qui est bien visible sur les figures 1 et 3, comprend deux roues 32 qui sont disposées chacune dans un plan radial et qui sont réalisées en matériau ferromagnétique, généralement en acier.

Chacune des roues 32 comporte un disque annulaire 33 relativement épais qui est disposé face à l'une des couronnes de pôles 24 du stator, un entrefer de faible épaisseur (par exemple de 1 à 3 mm) étant laissé libre entre ce disque 33 et les pôles 24 correspondants.

Chaque disque 33 est solidaire d'une couronne d'aubages 34 formant ailettes de refroidissement, qui s'étendent tous dans le plan radial de la roue 32 correspondante.

De plus, dans l'exemple représenté sur les dessins, ces aubages s'étendent chacun dans une direction radiale, mais ils pourraient éventuellement s'étendre chacun dans une direction inclinée par rapport à la direction radiale, tout en restant dans le plan radial de leur roue 32.

Sur la face de chaque roue 32 qui est la plus éloignée du stator, les aubages 34 sont en outre entretoisés par un disque annulaire 35 relativement mince.

Ce disque 35 délimite ainsi avec le disque épais 33 un espace annulaire dans lequel sont disposés les aubages 34 et dans lequel est canalisé l'air de refroidissement des roues 32.

Par ailleurs, chaque roue 32 du rotor est montée à une extrémité axiale d'un tube intercalaire 36 en acier qui présente une forme générale cylindrique de révolution centrée sur l'axe X.

Afin de réaliser ce montage, chaque roue 32 du rotor comporte quatre bras de fixation 37 qui sont disposés à 90 degrés les uns des autres et qui sont constitués chacun par deux aubages 34 prolongés vers l'intérieur jusqu'à une platine de fixation 38 elle-même fixée au tube intercalaire 36 par une vis 39 parallèle à l'axe X.

Dans l'exemple représenté sur la figure 3, les deux aubages 34 qui forment chaque bras de fixation 37 sont séparés l'un de l'autre par un aubage 34 non prolongé radialement vers l'intérieur, mais cette disposition n'est pas limitative.

Les bras de fixation 37 s'étendent dans le plan radial de leur roue 32, sans s'étendre en biais axialement vers le plan médian du ralentisseur, comme c'était le cas dans les ralentisseurs électriques de l'art antérieur : il en résulte une plus grande facilité de réalisation des roues 32, notamment lorsque ces roues sont obtenues par moulage.

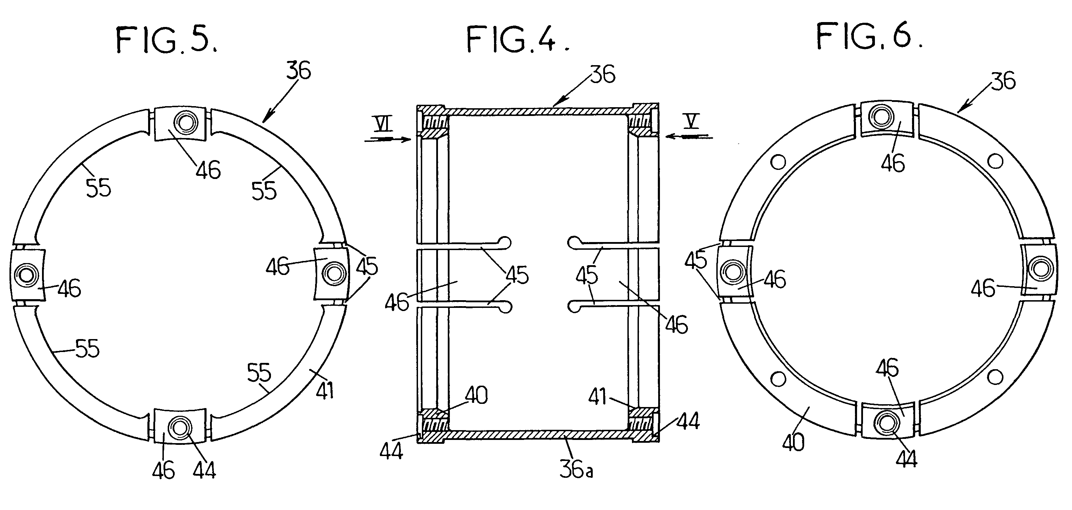

Par ailleurs, le tube intercalaire 36, qui est représenté en détail sur les figures 4 à 6, présente à ses deux extrémités axiales des première et deuxième brides sensiblement annulaires, respectivement 40, 41, dans lesquelles sont vissées les vis 39 permettant de fixer les roues 32.

Afin de limiter au maximum les jeux angulaires de montage des roues 32 sur ces brides, les vis 39 traversent des bagues 42 en acier qui sont chacune emboîtées à force à la fois dans un alésage 43 appartenant à la platine 38 correspondante, et dans un alésage 44 appartenant à la bride 40, 41 correspondante.

De plus, le tube intercalaire 36 comporte de préférence des fentes 45 qui s'étendent axialement vers l'intérieur du tube à partir de l'une ou l'autre des deux extrémités de ce tube, chaque fente 45 s'étendant sur moins de la moitié de la longueur axiale du tube, par exemple sur environ 1/3 de la longueur du tube.

Les fentes 45 sont disposées par paires en encadrant chaque vis 39, et en délimitant ainsi aux deux extrémités du tube 36 des lames 46 axiales aux extrémités desquelles sont fixés les bras 37 des roues 32.

Ces lames métalliques 46 sont suffisamment résistantes pour ne pas se déformer sensiblement sous l'effet des sollicitations extérieures subies par les roues 32, notamment :
- le poids des roues 32 (par exemple, environ 30 kg par roue),
- les sollicitations dynamiques verticales dues au roulement du véhicule, qui peuvent se traduire par exemple par une accélération allant jusqu'à 2 à 3 G suivant les cas d'utilisation,
- le couple de freinage obtenu lors du fonctionnement du ralentisseur électrique, ce couple pouvant valoir par exemple environ 2 000 à 2 500 Nm,
- et la force d'attraction magnétique subie par les roues 32 en direction des pôles 24, cette force pouvant dépasser par exemple une tonne, suivant la valeur de l'entrefer.

Par contre, les lames métalliques 46 sont dimensionnées pour pouvoir se déformer élastiquement radialement vers l'extérieur lorsque les roues 32 du rotor sont soumises à des dilatations thermiques du fait des hautes températures auxquelles elles peuvent être portées lors du fonctionnement du ralentisseur, ce qui compense l'absence de déformabilité radiale des bras de fixation 37.

Le cas échéant, les bras de fixation 37 pourraient d'ailleurs éventuellement être conçus pour pouvoir se déformer radialement. Cette déformabilité peut être obtenue par exemple en donnant une courbure suffisante aux prolongements des aubages 34 qui constituent les bras de fixation 37, lesquels bras de fixation restent de préférence situés dans le plan radial de leur roue 32.

Par ailleurs, les aubages 34 qui se prolongent radialement vers l'intérieur pour former les bras de fixation 37 présentent de préférence chacun un rétrécissement 47 selon la direction de l'axe X, entre le disque 33 et la platine 38 correspondante.

Ce rétrécissement 47 permet de diminuer la rigidité des bras 37 en flexion, ce qui limite les contraintes dues aux déformations thermiques des pièces.

Enfin, la première bride 40 du tube intercalaire 36 est fixée à un plateau 49 en acier par quatre vis 48, décalées angulairement de 45 degrés par rapport aux vis 39.

Ce plateau 49 est situé sensiblement dans le même plan radial que les platines 38 de fixation des roues 32, et il présente des encoches extérieures 50 pour laisser le passage auxdites platines 38.

Le plateau 49 est fixé au moyen de vis 51 sur la face arrière 12a de la fourche 12 du joint de cardan, dans un espace annulaire libre entre la fourche 12 et la plaque de fermeture 5.

La face arrière 12a est formée par un épaulement extérieur présenté par la fourche 12, et cette face arrière est de préférence usinée pour être parfaitement plane et parfaitement perpendiculaire à l'axe X.

Afin de garantir un montage sans jeu angulaire du plateau 49 sur la fourche 12, les vis 51 sont avantageusement complétées par des chevilles métalliques 52 emboîtées à force à la fois dans un alésage 53 qui traverse axialement le plateau 49 et dans un alésage borgne 54 qui pénètre dans la fourche 12 à partir de sa face arrière 12a (voir figure 3A).

On notera que le tube intercalaire 36 décrit ci-dessus permet de limiter efficacement l'encombrement diamétral du ralentisseur électromagnétique.

En effet, la partie centrale 36a de ce tube intercalaire, qui est comprise axialement entre les deux brides 40, 41, peut être située radialement très près des bobines 23, puisque les bras de fixation 37 des deux roues 32 ne viennent pas se rejoindre au centre des couronnes de bobines 23, au contraire des dispositifs de l'art antérieur.

En outre, du fait que la partie centrale 36a du tube intercalaire doit supporter seulement une roue 32 et non deux, cette partie centrale peut être relativement mince et présenter par exemple une épaisseur de l'ordre de 6 mm.

De plus, les brides 40, 41 du tube intercalaire 36 sont disposées radialement vers l'intérieur de la partie centrale 36a de ce tube, de sorte que le tube intercalaire ne présente sensiblement pas de partie faisant saillie vers l'extérieur, ce qui permet tout à la fois une introduction aisée du tube intercalaire 36 à l'intérieur de la couronne de bobines 23 malgré le faible jeu radial existant entre ce jeu et cette couronne, et d'autre part de limiter l'encombrement radial du tube intercalaire.

Le fait que les brides 40, 41 soient disposées vers l'intérieur du tube intercalaire ne gène en rien le fonctionnement du joint de cardan 10, dans la mesure où la bride 40 est solidaire de la fourche 12 de ce joint, tandis que la bride 41 est située axialement au-delà de l'autre fourche 13 en l'éloignant de la boîte de vitesses, c'est-à-dire au droit de l'arbre 11, beaucoup moins encombrant que le joint de cardan 10.

Enfin, pour limiter encore le jeu radial qui est nécessaire entre le joint de cardan 10 et la partie centrale 36a du tube intercalaire, la deuxième bride 41 de ce tube intercalaire présente vers l'intérieur des échancrures 55 dans ses portions intermédiaires entre les lames déformables 46.

Ainsi, on peut monter à l'intérieur du tube intercalaire 36 un gros joint de cardan, en passant les branches du croisillon 15 du joint de cardan et les deux fourches 12, 14 de ce joint de cardan dans les échancrures 55.

Le dispositif qui vient d'être décrit peut être entièrement réalisé en usine lors du montage initial de la transmission, mais il peut également être réalisé par adaptation a posteriori du ralentisseur électrique sur une transmission déjà montée dans un véhicule.

Dans ce dernier cas, on procède de préférence comme suit :
- après démontage du joint de cardan 10, on enlève au moins certaines des vis de fixation 6 de la plaque de fermeture 5,
- on usine les surfaces d'appui 30 sur la face extérieure de la plaque de fermeture 5,
- on remplace les vis 6 initiales par des vis de fixation 6 plus longues, et on fixe l'ossature 27 au carter au moyen de ces nouvelles vis, en serrant simultanément la plaque de fermeture 5 entre l'ossature 27 et le corps principal 4 du carter,
- on usine la face arrière 12a de la fourche 12, de façon qu'elle présente une surface parfaitement plane et perpendiculaire à l'axe X,
- on perce des trous filetés dans la fourche 12 à partir de sa face arrière,
- on engage la fourche 12 à l'intérieur du tube intercalaire 36 préalablement fixé au plateau 49, et on fixe la fourche 12 au plateau 49 au moyen des vis 51,
- on perce simultanément dans le plateau 49 et dans la fourche 12 les alésages 53, 54, puis on emboîte à force les chevilles métalliques 52 dans ces alésages, on remonte la fourche 12 sur l'arbre de sortie 2 de la boîte de vitesses, et on monte simultanément le flasque 25 du stator sur l'ossature 27 au moyen des vis 26,
- et enfin, on remonte complètement le joint de cardan 10 et l'arbre 11.

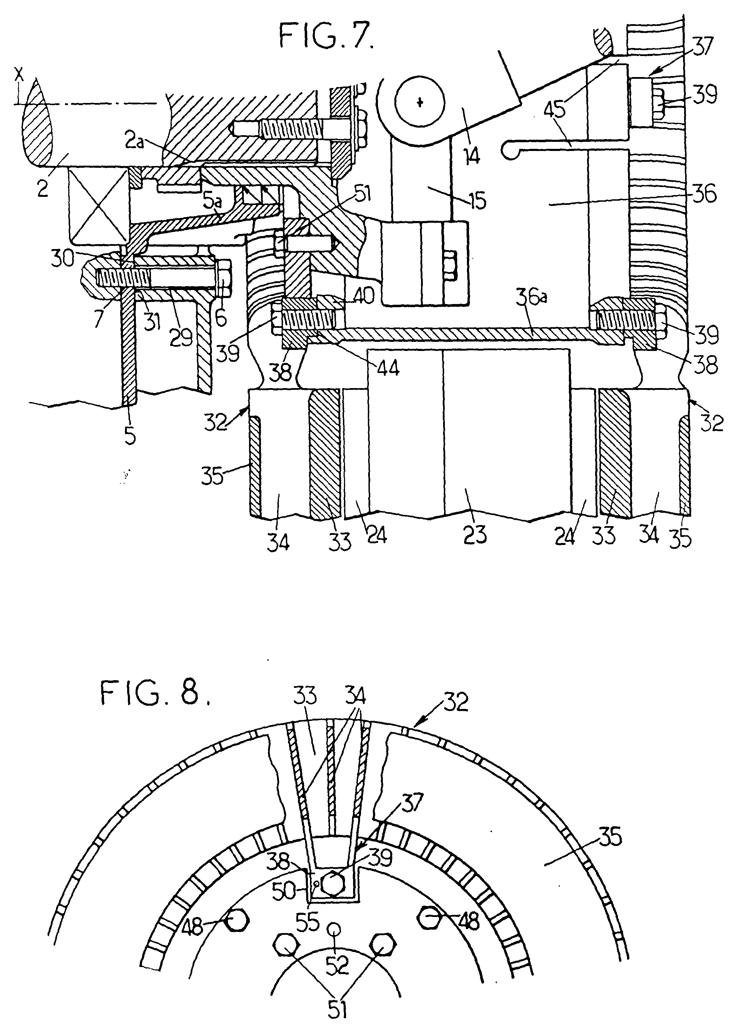

On notera que les bagues 42 servant au montage des roues 32 pourraient être avantageusement supprimées, comme représenté sur les figures 7 et 8.

Dans ce cas, on prévoit de préférence des chevilles métalliques qui sont disposées à côté d'au moins certaines des vis 39 et qui sont emboîtées à force à la fois dans la platine 38 correspondante et dans la bride 40, 41 correspondante.

## Revendications

1. Transmission pour véhicule terrestre à moteur, comprenant :
- un mécanisme de transmission (1) entraîné par le moteur du véhicule et présentant un arbre de sortie (2) rotatif autour d'un axe (X), ce mécanisme comportant un carter (3) qui comprend lui-même un corps principal (4) sur lequel est fixée une plaque de fermeture (5) au moyen de vis (6), cette plaque de fermeture s'étendant dans un plan moyen perpendiculaire à l'axe de rotation, et l'arbre de sortie étant supporté par au moins un palier d'extrémité (8) au voisinage de la plaque de fermeture,
- une fourche de joint de cardan (12) qui est entraînée par l'arbre de sortie (2) du mécanisme de transmission à travers la plaque de fermeture (5) et qui entraîne elle-même un arbre de liaison (11), cette fourche de joint de cardan présentant au moins un épaulement extérieur qui forme une face arrière (12a) orientée vers la plaque de fermeture (5), laquelle face arrière est écartée axialement de la plaque de fermeture en laissant libre un certain espace annulaire entre elle-même et ladite plaque de fermeture,
- et un ralentisseur électrique (20) à courants de Foucault comportant d'une part un stator inducteur (22) annulaire monté en porte-à-faux sur le carter (3) à l'aide d'une ossature (27), et d'autre part un rotor (21) comprenant au moins un disque induit (33) en matériau ferromagnétique qui est disposé en regard du stator et qui est solidarisé à l'arbre de sortie (2) du mécanisme de transmission au moyen d'un organe de support (49), l'ossature (27) étant fixée au carter (3) par au moins certaines des vis (6) susmentionnées qui servent également à la fixation de la plaque de fermeture (5) de ce carter, cette plaque de fermeture étant traversée par ces vis et étant ainsi serrée entre l'ossature (27) et le corps principal (4) du carter, et ladite plaque de fermeture n'incluant aucun organe de support spécialement conçu pour monter le stator du ralentisseur électrique,
**caractérisé en ce que** la fourche de joint de cardan (12) est fixée directement à l'arbre de sortie (2),
**en ce que** l'organe de support (49) du rotor est fixé uniquement sur la face arrière (12a) de la fourche de joint de cardan (12) dans l'espace annulaire compris entre la plaque de fermeture et la face arrière de ladite fourche de joint de cardan, cette fourche de joint de cardan ayant une position axiale indépendante de la présence du ralentisseur électrique,
**et en ce que** le palier d'extrémité (8) de l'arbre de sortie a une constitution indépendante de la présence du ralentisseur électrique.

2. Transmission selon la revendication 1, dans laquelle l'organe de support (49) est vissé sur la face arrière (12a) de la fourche de joint de cardan.

3. Transmission selon la revendication 2, dans laquelle la fourche de joint de cardan (12) comporte au moins un alésage borgne (54) qui débouche dans sa face arrière (12a), l'organe de support (49) étant traversé par un alésage (53) en correspondance exacte avec l'alésage (54) de la fourche de joint de cardan, et une cheville métallique (52) étant emboîtée à force dans ces deux alésages pour solidariser parfaitement en rotation l'organe de support et la fourche de joint de cardan.

4. Transmission selon l'une quelconque des revendications précédentes, dans laquelle l'organe de support (49) est un plateau sensiblement annulaire qui s'étend radialement vers l'extérieur à partir de la fourche de joint de cardan (12).

5. Transmission selon la revendication 4, dans laquelle le plateau (49) est solidaire d'un tube (36) qui entoure la fourche de joint de cardan (12) et sur lequel est monté le disque induit (33) du rotor.

6. Transmission selon l'une quelconque des revendications précédentes, dans laquelle le mécanisme de transmission (1) est une boîte de vitesses.

7. Procédé pour adapter un ralentisseur électrique (20) à courants de Foucault sur une transmission pour véhicule terrestre à moteur, cette transmission comprenant :
- un mécanisme de transmission (1) entraîné par le moteur du véhicule et présentant un arbre de sortie (2) rotatif autour d'un axe (X), ce mécanisme comportant un carter (3) qui comprend lui-même un corps principal (4) sur lequel est fixée une plaque de fermeture (5) au moyen de vis (6), cette plaque de fermeture s'étendant dans un plan moyen perpendiculaire à l'axe de rotation (X) et ladite plaque de fermeture n'incluant aucun organe de support spécialement conçu pour monter le ralentisseur électrique, l'arbre de sortie étant supporté par au moins un palier d'extrémité (8) au voisinage de la plaque de fermeture, lequel palier d'extrémité a une constitution indépendante de la présence du ralentisseur électrique,
- et une fourche de joint de cardan (12) qui est fixée directement à l'arbre de sortie (2) du mécanisme de transmission à travers la plaque de fermeture (5) et qui entraîne un arbre de liaison (11), cette fourche de joint de cardan présentant au moins un épaulement extérieur qui forme une face arrière (12a) orientée vers la plaque de fermeture, laquelle face arrière est écartée axialement de la plaque de fermeture en laissant libre un certain espace annulaire entre elle-même et ladite plaque de fermeture, et la fourche de joint de cardan (12) ayant une position axiale indépendante de la présence du ralentisseur électrique,
le ralentisseur électrique (20) à courants de Foucault comportant d'une part un stator inducteur (22) annulaire destiné à être monté en porte-à-faux sur le carter (3) à l'aide d'une ossature (27), et d'autre part un rotor (21) comportant au moins un disque induit (33) en matériau ferromagnétique qui est disposé en regard du stator et qui est destiné à être solidarisé à la fourche de joint de cardan (12) au moyen d'un organe de support (49),
ce procédé comportant les étapes suivantes :
a) démonter la fourche de joint de cardan (12),
b) fixer l'ossature (27) au carter (3) par au moins certaines des vis (6) de la plaque de fermeture (5) en fixant simultanément cette plaque de fermeture, la plaque de fermeture (5) étant alors traversée par ces vis (6) et étant ainsi serrée entre l'ossature (27) et le corps principal (4) du carter,
c) fixer l'organe de support (49) du rotor uniquement sur la face arrière (12a) de la fourche de joint de cardan dans l'espace annulaire compris entre la plaque de fermeture (5) et la face arrière (12a) de la fourche de joint de cardan,
d) et remonter cette fourche de joint de cardan dans la position axiale exacte qu'elle occupait initialement relativement à la plaque de fermeture (5).

8. Procédé selon la revendication 7, comprenant en outre une étape préliminaire au cours de laquelle :
- on usine, sur la face extérieure de la plaque de fermeture (5), des surfaces d'appui (30) parfaitement planes et parfaitement perpendiculaires à l'axe de rotation (X), autour des trous de fixation (7) de ladite plaque de fermeture qui reçoivent les vis (6) de fixation de cette plaque, l'ossature (27) comportant par ailleurs des surfaces d'appui (31) complémentaires qui viennent en regard desdites surfaces d'appui de la plaque de fermeture,
- et on usine la face arrière (12a) de la fourche de joint de cardan de façon qu'elle soit parfaitement plane et perpendiculaire à l'axe de rotation (X).

9. Procédé selon l'une quelconque des revendications 7 et 8, dans lequel l'étape c) est suivie par une étape consistant à :
- percer à la fois dans l'organe de fixation (49) et dans la fourche de joint de cardan (12) au moins un alésage (53, 54) qui traverse l'organe de support (49) et pénètre dans la fourche de joint de cardan (12),
- et emboîter à force une cheville métallique (52) dans ledit alésage, cette cheville pénétrant à la fois dans l'organe de support et dans la fourche de joint de cardan.

10. Procédé selon l'une quelconque des revendications 7 à 9, dans lequel au cours de l'étape a), on enlève au moins certaines des vis de fixation de la plaque de fermeture (5), et on les remplace par des vis (6) plus longues en fixant simultanément l'ossature (27) au carter (3) au moyen de ces vis.

## Patentansprüche

1. Kraftübertragung für Motor-Landfahrzeuge, umfassend:
- einen Kraftübertragungsmechanismus (1), der durch den Motor des Fahrzeugs angetrieben wird und eine um eine Achse (X) drehende Ausgangswelle (2) aufweist, wobei dieser Mechanismus ein Gehäuse (3) enthält, das seinerseits einen Hauptkörper (4) umfaßt, an dem eine Schließplatte (5) mittels Schrauben (6) befestigt ist, wobei sich diese Schließplatte in einer Mittelebene erstreckt, die senkrecht zur Drehachse ist, und die Ausgangswelle durch wenigstens ein Endlager (8) in der Nähe der Schließplatte abgestützt wird,
- eine Kardangelenkgabel (12), die von der Ausgangswelle (2) des Kraftübertragungsmechanismus durch die Schließplatte (5) hindurch angetrieben wird und die ihrerseits eine Verbindungswelle (11) antreibt, wobei diese Kardangelenkgabel wenigstens eine äußere Schulter aufweist, die eine rückseitige Fläche (12a) bildet, die zur Schließplatte (5) hin ausgerichtet ist, wobei die rückseitige Fläche axial zur Schließplatte entfernt liegt, indem einiger ringförmiger Raum zwischen ihr selbst und der Schließplatte frei gelassen wird,
- und eine elektrische Wirbelstrombremse (20), die einerseits einen ringförmigen Induktorstator (22), der vorstehend am Gehäuse (3) mit Hilfe eines Tragwerks (27) angebracht ist, und andererseits einen Rotor (21) enthält, der wenigstens eine Läuferscheibe (33) aus ferromagnetischem Material umfaßt, die gegenüberstehend zum Stator angeordnet ist und die an der Ausgangswelle (2) des Kraftübertragungsmechanismus mittels eines Stützorgans (49) befestigt ist, wobei das Tragwerk (27) am Gehäuse (3) durch wenigstens einige der vorher erwähnten Schrauben (6) befestigt ist, die auch zur Befestigung der Schließplatte (5) dieses Gehäuses dienen, wobei diese Schließplatte von diesen Schrauben durchlaufen wird und somit zwischen dem Tragwerk (27) und dem Hauptkörper (4) des Gehäuses eingeklemmt ist, wobei die Schließplatte keinerlei speziell zum Anbringen des Stators der elektrischen Bremse ausgelegtes Stützorgan einschließt,
**dadurch gekennzeichnet, daß** die Kardangelenkgabel (12) direkt an der Ausgangswelle (2) befestigt ist,
**daß** das Stützorgan (49) des Rotors einzig und allein an der rückseitigen Fläche (12a) der Kardangelenkgabel (12) im zwischen der Schließplatte und der rückseitigen Fläche der Kardangelenkgabel liegenden ringförmigen Raum befestigt ist, wobei diese Kardangelenkgabel eine vom Vorhandensein der elektrischen Bremse unabhängige axiale Position hat,
und **daß** das Endlager (8) der Ausgangswelle eine vom Vorhandensein der elektrischen Bremse unabhängige Beschaffenheit hat.

2. Kraftübertragung nach Anspruch 1, bei der das Stützorgan (49) an der rückseitigen Fläche (12a) der Kardangelenkgabel verschraubt ist.

3. Kraftübertragung nach Anspruch 2, bei der die Kardangelenkgabel (12) wenigstens eine Blindbohrung (54) enthält, die in ihre rückseitige Fläche (12a) mündet, wobei das Stützorgan (49) von einer Bohrung (53) in genauer Übereinstimmung mit der Bohrung (54) der Kardangelenkgabel durchlaufen wird und ein Metallbolzen (52) mit Kraft in diese beiden Bohrungen hineingetrieben ist, um das Stützorgan und die Kardangelenkgabel drehungsmäßig vollkommen zu verbinden.

4. Kraftübertragung nach einem der vorhergehenden Ansprüche, bei der das Stützorgan (49) eine im wesentlichen ringförmige Scheibe ist, die sich, ausgehend von der Kardangelenkgabel (12), radial nach außen erstreckt.

5. Kraftübertragung nach Anspruch 4, bei der die Scheibe (49) mit einem Rohr (36) vereint ist, das die Kardangelenkgabel (12) umgibt und an dem die Läuferscheibe (33) des Rotors angebracht ist.

6. Kraftübertragung nach einem der vorhergehenden Ansprüche, bei der der Kraftübertragungsmechanismus (1) ein Schaltgetriebe ist.

7. Verfahren zum Anbringen einer elektrischen Wirbelstrombremse (20) an einer Kraftübertragung für Motor-Landfahrzeuge, wobei diese Kraftübertragung umfaßt:
- einen Kraftübertragungsmechanismus (1), der durch den Motor des Fahrzeugs angetrieben wird und eine um eine Achse (X) drehende Ausgangswelle (2) aufweist, wobei dieser Mechanismus ein Gehäuse (3) enthält, das seinerseits einen Hauptkörper (4) umfaßt, an dem eine Schließplatte (5) mittels Schrauben (6) befestigt ist, wobei sich diese Schließplatte in einer Mittelebene erstreckt, die senkrecht zur Drehachse (X) ist und die Schließplatte keinerlei speziell zum Anbringen der elektrischen Bremse ausgelegtes Stützorgan enthält,
wobei die Ausgangswelle durch wenigstens ein Endlager (8) in der Nähe der Schließplatte abgestützt ist, wobei das Endlager eine vom Vorhandensein der elektrischen Bremse unabhängige Beschaffenheit hat,
- und eine Kardangelenkgabel (12), die direkt an der Ausgangswelle (2) des Kraftübertragungsmechanismus durch die Schließplatte (5) hindurch befestigt ist und die eine Verbindungswelle (11) antreibt, wobei diese Kardangelenkgabel wenigstens eine äußere Schulter aufweist, die eine rückseitige Fläche (12a) bildet, die zur Schließplatte hin ausgerichtet ist, wobei die rückseitige Fläche axial zur Schließplatte entfernt liegt, indem einiger ringförmiger Raum zwischen ihr selbst und der Schließplatte frei gelassen wird, und die Kardangelenkgabel (12) eine vom Vorhandensein der elektrischen Bremse unabhängige axiale Position hat,
wobei die elektrische Wirbelstrombremse (20) einerseits einen ringförmigen Induktorstator (22), der mit Hilfe eines Tragwerks (27) vorstehend am Gehäuse (3) angebracht werden soll, und andererseits einen Rotor (21) enthält, der wenigstens eine Läuferscheibe (33) aus ferromagnetischem Material umfaßt, die gegenüberstehend zum Stator angebracht ist und die an der Kardangelenkgabel (12) mittels eines Stützorgans (49) befestigt werden soll,
wobei dieses Verfahren die folgenden Schritte umfaßt:
a) Ausbauen der Kardangelenkgabel (12),
b) Befestigen des Tragwerks (27) am Gehäuse (3) durch wenigstens einige Schrauben (6) der Schließplatte (5) unter gleichzeitigem Befestigen dieser Schließplatte, wobei die Schließplatte (5) dann von diesen Schrauben (6) durchlaufen wird und somit zwischen dem Tragwerk (27) und dem Hauptkörper (4) des Gehäuses eingeklemmt ist,
c) Befestigen des Stützorgans (49) des Rotors einzig und allein an der rückseitigen Fläche (12a) der Kardangelenkgabel im zwischen der Schließplatte (5) und der rückseitigen Fläche (12a) der Kardangelenkgabel liegenden, ringförmigen Raum,
d) und Wiederanbringen dieser Kardangelenkgabel in der genauen axialen Position, die sie anfänglich relativ zur Schließplatte (5) belegte.

8. Verfahren nach Anspruch 7, das außerdem einen vorbereitenden Schritt umfaßt, im Verlaufe dessen :
- auf der Außenfläche der Schließplatte (5) vollkommen ebene und zur Drehachse (X) vollkommen senkrechte Abstützflächen (30) um Befestigungslöcher (7) der Schließplatte gefertigt werden, welche die Schrauben (6) zur Befestigung dieser Platte aufnehmen, wobei das Tragwerk (27) überdies komplementäre Abstützflächen (31) enthält, die gegenüberstehend zu den Abstützflächen der Schließplatte zu liegen kommen,
- und die rückseitige Fläche (12a) der Kardangelenkgabel derart gefertigt wird, daß sie vollkommen eben und senkrecht zur Drehachse (X) ist.

9. Verfahren nach einem der Ansprüche 7 und 8, bei dem dem Schritt c) ein Schritt nachfolgt, der darin besteht:
- zugleich in das Befestigungsorgan (49) und in die Kardangelenkgabel (12) wenigstens eine Bohrung (53, 54) zu bohren, die durch das Stützorgan (49) hindurchläuft und in die Kardangelenkgabel (12) eindringt,
- und mit Kraft einen Metallbolzen (52) in die genannte Bohrung hineinzutreiben, wobei dieser Bolzen zugleich in das Stützorgan und in die Kardangelenkgabel eindringt.

10. Verfahren nach einem der Ansprüche 7 bis 9, bei dem im Verlaufe des Schrittes a) wenigstens einige der Befestigungsschrauben der Schließplatte (5) entfernt und diese durch längere Schrauben (6) ersetzt werden, wobei gleichzeitig das Tragwerk (27) am Gehäuse (3) mittels dieser Schrauben befestigt wird.

## Claims

1. A transmission system for self-propelled land vehicles, the transmission system comprising:
. a transmission mechanism (1) driven by the engine of the vehicle and having an outlet shaft (2) rotatable about an axis (X), said mechanism including a case (3) itself comprising a main body (4) on which a closure plate (5) is fixed by means of screws (6), said closure plate extending in a mean plane perpendicular to the axis of rotation, and the outlet shaft being supported by at least one end bearing (8) in the vicinity of the closure plate;
. a universal joint fork (12) driven by the outlet shaft (2) of the transmission mechanism through the closure plate (5) and itself driving a link shaft (11), said universal joint fork having at least one outside shoulder which forms a rear face (12a) directly towards the closure plate (5), which rear face is axially offset from the closure plate leaving a certain amount of annular space free between itself and said closure plate; and
. an electrical eddy current retarder (20) comprising both a stationary annular inductor stator (22) cantilevered out from the case (3) by means of a framework (27), and a rotor (21) including at least one core disk (33) of ferromagnetic material disposed facing the inductor stator and secured to the outlet shaft (2) of the transmission mechanism by means of a support member (49), the framework (27) being fixed to the case (3) by at least some of the above-mentioned screws (6) which also serve to fix the closure plate (5) to the case, said screws passing through the closure plate, thereby clamping it between the framework (27) and the main body (4) of the case, and the closure plate including no support member specially designed for mounting the stator of the electrical retarder,
**characterized in that** the universal joint fork (12) is directly fixed to the outlet shaft (2),
**in that** the support member (49) of the rotor is fixed solely to the rear face (12a) of the universal joint fork (12) in the annular space between the closure plate and the rear face of the universal joint fork, said universal joint fork having an axial position which is independent of the presence of the electrical retarder, and
**in that** the end bearing (8) for the outlet shaft is of a structure that is independent of the presence of the electrical retarder.

2. A transmission system according to claim 1, in which the support member (49) is screwed to the rear face (12a) of the universal joint fork.

3. A transmission system according to claim 2, in which the universal joint fork (12) includes at least one blind bore (54) opening out into its rear face (12a), the support member (49) having a through bore (53) in exact correspondence with the bore (54) of the universal joint fork, and a metal peg (52) being engaged as a force-fit in said two bores to ensure that the support member and the universal joint fork are completely constrained to rotate together.

4. A transmission system according to any preceding claim, in which the support member (49) is a substantially annular slab extending radially outwards from the link member (12).

5. A transmission system according to claim 4, in which the slab (49) is secured to a tube (36) surrounding the universal joint fork (12) and on which the core disk (33) of the rotor is mounted.

6. A transmission system according to any preceding claim, in which the transmission mechanism (1) is a gear box.

7. A method of fitting an electrical eddy current retarder (20) to a transmission system for a self-propelled land vehicle, the transmission comprising:
. a transmission mechanism (1) driven by the engine of the vehicle and having an outlet shaft (2) rotatable about an axis (X), said mechanism including a case (3) itself comprising a main body (4) on which a closure plate (5) is fixed by means of screws (6), said closure plate extending in a mean plane that is perpendicular to the axis of rotation (X) and said closure plate including no support member specially designed for mounting the electrical retarder, the outlet shaft being supported by at least one end bearing (8) in the vicinity of said closure plate, which end bearing is of a structure that is independent of the presence of the electrical retarder; and
. a universal joint fork (12) universal joint fork which is directly fixed to the outlet shaft (2) of the transmission mechanism through the closure plate (5) and which drives a link shaft (11), said universal joint fork having at least one outside shoulder which forms a rear face (12a) directed towards the closure plate, which rear face is axially offset from the closure plate, leaving a certain amount of annular space free between itself and said closure plate, and the axial position of the universal joint fork (12) being independent of the presence of the electrical retarder,
the electrical eddy current retarder (20) including both an annular inductor stator (22) designed to be cantilevered out from the case (3) by means of a framework (27), and a rotor (21) including at least one core disk (33) of ferromagnetic material disposed facing the stator and secured to be secured to the link member (12) by means of a support member (49),
said method including the following steps:
a) disassembling the universal joint fork (12) ;
b) fixing the framework (27) to the case (3) by means of at least some of the screws (6) of the closure plate (5), thereby simultaneously fixing said closure plate, said screws (6) then passing through the closure plate (5) which is thus clamped between the framework (27) and the main body (4) of the case;
c) fixing the support member (49) of the rotor solely on the rear face (12a) of the universal joint fork in the annular space between the closure plate (5) and the rear face (12a) of the universal joint fork ; and
d) then reassembling said universal joint fork in exactly the same axial position as it occupied initially relative to the closure plate (5).

8. A method according to claim 7, further including a preliminary step during which:
. accurately plane bearing surfaces (30) that are accurately perpendicular to the axis of rotation (X) are machined on the outside face of the closure plate (5) around the fixing holes (7) of said closure plate that receive the fixing screws (6) of said plate, the framework (27) including complementary bearing surfaces (31) that face said bearing surfaces of the closure plate; and
. the rear face (12a) of the universal joint fork is machined so that it is accurately plane and perpendicular to the axis of rotation (X).

9. A method according to claim 7 or 8, in which step c) is followed by a step consisting in:
. piercing at least one bore (53, 54) both in the fixing member (49) and in the universal joint fork (12) such that the bore passes through the support member (49) and penetrates into the universal joint fork (12); and
. engaging a metal peg (52) as a force-fit in said bore, said peg penetrating both into the support member and into the universal joint fork.

10. A method according to any one of claims 7 to 9, in which during step a), at least some of the fixing screws of the closure plate (5) are removed and replaced by longer fixing screws (6) serving also to fix the framework (27) to the case (3) by means of said screws.
